(19) Europäisches Patentamt
European Patent Office
Office européen des brevets

(11) **EP 3 319 719 B1**

(12) **EUROPÄISCHE PATENTSCHRIFT**

(45) Veröffentlichungstag und Bekanntmachung des Hinweises auf die Patenterteilung:
**29.04.2020   Patentblatt 2020/18**

(21) Anmeldenummer: **16734388.8**

(22) Anmeldetag: **04.07.2016**

(51) Int Cl.:
*A23L 29/30* (2016.01)　　　*A23L 33/17* (2016.01)
*A23L 33/19* (2016.01)　　　*A23G 3/00* (2006.01)
*A23L 27/00* (2016.01)　　　*A23L 35/00* (2016.01)
*B01F 17/00* (2006.01)　　　*A23L 29/10* (2016.01)

(86) Internationale Anmeldenummer:
**PCT/EP2016/065651**

(87) Internationale Veröffentlichungsnummer:
**WO 2017/005672 (12.01.2017 Gazette 2017/02)**

(54) **EMULGATORMISCHUNGEN**

EMULSIFIER MIXTURES

MÉLANGES ÉMULSIFIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2015   EP 15175436**
　　　　　　 **07.04.2016   EP 16164182**

(43) Veröffentlichungstag der Anmeldung:
**16.05.2018   Patentblatt 2018/20**

(73) Patentinhaber: **BASF SE**
**67056 Ludwigshafen am Rhein (DE)**

(72) Erfinder:
• **DENNHOEFER, Anna**
**87719 Mindelheim (DE)**
• **REITLINGER, Christina**
**86488 Breitenthal (DE)**

• **MUELLER, Michael**
**89165 Dietenheim (DE)**
• **ALAOUI ISMAILI ZEMMAHI, Smail**
**89257 Illertissen (DE)**
• **HOFMANN, Alois**
**89257 Illertissen-Jedesheim (DE)**
• **RUDOLPH, Kristina**
**68165 Mannheim (DE)**

(74) Vertreter: **BASF IP Association**
**BASF SE**
**G-FLP-C006**
**67056 Ludwigshafen (DE)**

(56) Entgegenhaltungen:
**WO-A2-2016/118009      US-A- 4 325 979**
**US-A1- 2011 200 732**

**Beschreibung**

Die vorliegende Erfindung betrifft Mischungen, die als Aufschlagemulgatoren Verwendung finden können, wobei die Mischungen ohne die Verwendung von Palmöl hergestellt werden, sowie deren Verwendung und Produkte, diese Mischungen enthaltend.

Aufschlagemulgatoren als solches sind dem Fachmann hinlänglich bekannt. Bisherige Emulgatormischungen enthalten aber in aller Regel Palmöl und dessen Derivate. Aufgrund der Probleme mit Nachhaltigkeit bezüglich der Gewinnung von Palmöl und Derivaten wünscht der Konsument jedoch Alternativen zu Palmöl. Daher kann bei der Herstellung entweder auf als "Nachhaltig hergestellt"-zertifizierte Palmöl-Produkte zurückgegriffen werden, oder es müssen Alternativen zu Palmöl-Produkten als Einsatzstoff gefunden werden.

Beim Ersatz von Palmöl ist aber zu berücksichtigen, dass dieses eine Produkt-typische Zusammensetzung aufweist, die auch nach Herkunft in gewissen bekannten Grenzen schwanken kann, die dem Fachmann bekannt ist. Ein einfacher Ersatz des Palmöls durch ein anderes Öl ist daher nicht ohne Weiteres zu erreichen, da ansonsten die geforderten Eigenschaftsprofile der Emulgatormischungen nicht erreichbar sind. Bei Aufschlagemulgatoren ist insbesondere zu berücksichtigen, dass flüssige Anteile im eingesetzten Fett die Eigenschaften des Aufschlagemulgators negativ beeinflussen, da die flüssigen Fette (auch gemeinhin als "Öle" bezeichnet) die Konsistenz des aufgeschlagenen Lebensmittels, das heißt also des "Lebensmittelschaumes", ungünstig beeinflussen. So sind üblicherweise die Festigkeit, Cremigkeit, Schneidbarkeit und so weiter (d.h. allgemein die "Konsistenz") deutlich schlechter, je mehr Öl-Anteile im eingesetzten Fett enthalten sind und daher je höher der Ölanteil in der Aufschlagemulgatormischung ist. US 2011/200732 offenbart einen Aufschlagemulgator enthaltend Sonnenblumenöl, Mono- und Diglyceride, Glukosesirup, Natrium Kaseinat und Phosphate. US 4325979 offenbart ein Aufschlagmittel enthaltend teilweise hydriertes Kokosnussöl, Fettsäureester von Glyzerin und Propylenglykol und Monoglyzeride.

Gesucht waren daher Emulgatormischungen, die insbesondere als Aufschlagemulgatoren Verwendung finden können, die im Vergleich zu den bisherigen Mischungen auf Palmöl-Bestandteile vollständig verzichten und dennoch gleiche oder bessere Konsistenz, Haltbarkeit der Konsistenz, Lagerfähigkeit des Schaumes wie auch der Emulgatormischung als solches und weiterhin gute oder bessere Geschmackseigenschaften aufweisen.

Gefunden wurden Mischungen, die als Aufschlagemulgatoren Verwendung finden können, wobei die Mischungen ohne die Verwendung von Palmöl hergestellt werden, sowie deren Verwendung und Produkte, diese Mischungen enthaltend.

Komponente 1:

Die erfindungsgemäßen Emulgatormischungen enthalten als Fettkomponente Kokosfett, das ungehärtet ist, insbesondere ein raffiniertes ungehärtetes Kokosnussöl, erhältlich etwa als "coconut oil refined Ph.Eur.8.". Dabei handelt es sich um Raffiniertes Öl der Cocos Nucifera, das aus dem getrockneten festen Teil des Nährgewebes des Kokossamens (umgangssprachlich des "weißen Fleischs der Kokosnuss") gewonnen und dann raffiniert wird (CAS Nummer 8001-31-8).

Komponente 2:

Weiterhin enthalten die erfindungsgemäßen Emulgatormischungen Milchsäureester aus Mono-/Diglyzeriden als Emulgator wie LACTEM (E472b) und/oder Essigsäureester von Mono-/ Diglyzeriden wie ACETEM (E472a) und/oder Propylenglycolester von Fettsäuren ("PGMS", E477) wie insbesondere Propylenglycolmonostearat, bevorzugt ein Milchsäureester enthaltend Monoglyceride, besonders bevorzugt LACTEM , besonders bevorzugt ein Lactem aus überwiegend veresterten Monoglyzeriden und insbesondere bevorzugt ein Lactem mit nahezu ausschliesslich aus veresterten Monoglyzeriden. Bevorzugt ist die Fettsäurekomponente in der Komponente 2 ebenfalls ohne die Verwendung von Palmöl-Erzeugnissen hergestellt. Erfindungsgemäß eingesetzt werden kann demnach ein Lactem auf beispielsweise Rapsölbasis, etwa Lamegin GLP 2410, eine Rapsöl-basierte Variante von Lamegin GLP 2410, und sonstige bekannte Produkte, die unter "E472b" fallen.

Komponente 3:

Weiterhin enthalten die erfindungsgemäßen Emulgatormischungen ein nichtionisches Mono-diglyzerid (im folgenden als "nichtionisches Monoglyzerid" oder "Monoglyzerid" bezeichnet), mit einer ungesättigten C14 bis C22-Fettsäure wie einer C16-C20 und besonders C18-Fettsäure, ganz insbesondere bevorzugt mit im Wesentlichen Ölsäure wie insbesondere ein Monoglyzerid mit nahezu ausschliesslich Ölsäure wie etwa Ölsäure in kommerziell erhältlich üblicher hoher Reinheit.

Als Nebenkomponenten kann das nichtionische Monoglyzerid weitere Bestandteile als Additive enthalten, die nicht erfindungswesentlich sind, wie Lecithine, Tocopherol und Tocopherol-haltige Extrakte, Ascorbylpalmitat und/oder Zitronensäureester von Mono- und Diglyzeriden. Solche zusätzlichen Bestandteile sind dem Fachmann bekannt als E304, E306, E 322 und E 472c. Besonders bevorzugt werden solche Substanzen eingesetzt, die ebenfalls nicht auf Rapsöl basieren, etwa Monomuls 90-O 18 OA, das eine Tocopherolmischung aus Soja enthält, nicht jedoch Ascorbylpalmitat oder E472c.

Das nichtionische Monoglyzerid ist bevorzugt ein E471, das eines oder mehrere der genannten Nebenkomponenten enthalten kann. Ein solches Monoglyzerid kann beispielsweise Monomuls 90-O-18 OA sein.

Komponente 4:

Als weiterer Bestandteil der erfindungsgemäßen Emulgatormischungen werden Zucker als einzelne Zucker und/oder als Mischungen von zwei oder mehreren Zuckern eingesetzt (im Folgenden als "Zucker" bezeichnet). Zucker kann dabei als etwa Feststoff, als Lösung oder angedickter Sirup eingesetzt werden. Wird Zucker als lösemittelhaltige, bevorzugt als wässrige Lösung oder Sirup eingesetzt, so wird die erfindungsgemäße Emulgatormischung üblicherweise zum Abschluss der Herstellung der Emulgatormischung getrocknet mit dem Fachmann bekannten Trocknungsmethoden, bevorzugt Walzentrocknung, Sprühtrocknung oder Schaufeltrocknung, besonders bevorzugt Sprühtrocknung. Bevorzugt eingesetzt wird Zucker als Zuckersirup. Bevorzugt eingesetzt als Zucker wird Glucose enthaltend höhere Saccharide. Besonders bevorzugt eingesetzt wird daher ein Glucosesirup, besonders bevorzugt ein Glucosesirup mit einem DE-Wert von 24 bis 36, bevorzugt 28 bis 32, besonders bevorzugt 30. Bevorzugt enthält ein solcher Glucosesirup jeweils etwa 70 Prozent höhere Saccharide.

Komponente 5:

Weiterhin enthalten die erfindungsgemäßen Emulgatormischungen einen Proteinbestandteil, bevorzugt Casein oder Casein-Derivat, besonders bevorzugt ein Caseinat, insbesondere Natriumcaseinat, etwa aus der Behandlung von Casein mit Natronlauge. Bei Verwendung von LACTEM wird ein solches Casein oder Casein-Derivat, bevorzugt Natriumcaseinat, bevorzugt eingesetzt.

Wird dagegen ACETEM oder PGMS verwendet, findet als Proteinquelle bevorzugt Magermilchpulver Verwendung.

Komponente 6:

Weiterhin können die erfindungsgemäßen Emulgatormischungen optional sonstige Bestandteile enthalten, die für eine solche Formulierung üblicherweise vom Fachmann eingesetzt werden können, und die die Eigenschaften der Emulgatormischungen nicht wesentlich oder bevorzugt nicht negativ beeinflussen. Solche üblichen Einsatzstoffe sind beispielsweise Farbstoffe, Geschmacksstoffe, Antioxidantien, Konservierungsmittel, weitere geeignete Emulgatoren, Zuckeralkohole und/oder Zuckerersatzstoffe wie Stevia.

Bevorzugt eingesetzt werden als optionale Bestandteile Phosphate als Stabilisatoren, wie beispielsweise Natrium- und/oder Kaliumphosphate, bevorzugt Kaliumphosphate, besonders bevorzugt Mono-Kalium- und/oder Dikaliumphosphat und/oder Tetrakaliumphosphat, und insbesondere Tetrakaliumphosphat wie ganz insbesondere Tetrakaliumpyrophosphat; insbesondere werden als optionale sonstige Bestandteile nur Phosphate eingesetzt, wie Natrium- und/oder Kaliumphosphate u, bevorzugt Kaliumphosphate, besonders bevorzugt Mono-Kalium- und/oder Dikaliumphosphat und/oder Tetrakaliumphosphat, und insbesondere Tetrakaliumpyrophosphat, ganz insbesondere Tetrakaliumpyrophosphat.

Solche Substanzen wie Stabilisatoren sind fachbekannt. Sie wirken je nach chemischer Struktur beispielsweise als pH-Stabilisatoren etwa ähnlich wie pH-Puffer.

Die erfindungsgemäßen Emulgatormischungen enthalten daher jeweils wenigstens eine Substanz ausgewählt aus den zuvor genannten notwendigen Bestandteilen (das heißt jeweils wenigstens eine Substanz aus jeweils Komponenten 1 bis 5) und eines oder mehrere der optionalen Bestandteile (Komponente 6), wobei die jeweiligen Bevorzugungen der Einzelbestandteile in allen denkbaren Kombinationen mit den jeweiligen Bevorzugungen der anderen Einzelbestandteile von der vorliegenden Erfindung umfasst sind.

Dies bedeutet dass beispielweise für Komponente 1 die besonders bevorzugte Auswahl mit der bevorzugten Auswahl für Komponente 2, der allgemeinen Auswahl für Komponente 3, der allgemeinen Auswahl für Komponente 4 und der im insbesonderen bevorzugten Auswahl für Komponente 5 sowie der allgemeinen Auswahl für Komponente 6 kombiniert werden kann. Umfasst von der vorliegenden Erfindung sind daher alle Permutationen, die durch die Kombination von der Auswahl innerhalb von Komponente 1 mit der Auswahl innerhalb von Komponente 2 und der Auswahl innerhalb von Komponente 3 und der Auswahl innerhalb von Komponente 4 und der Auswahl innerhalb von Komponente 5 und der Auswahl innerhalb von Komponente 6 sich ergeben.

Besonders bevorzugte Ausführungen der vorliegenden Erfindung sind Emulgatormischungen, bei denen bei der jeweiligen Auswahl innerhalb von Komponenten 1 bis 6 die jeweils bevorzugten Substanz(en) ausgewählt werden.

Insbesonders bevorzugte Ausführungen der vorliegenden Erfindung sind Emulgatormischungen, bei denen bei der jeweiligen Auswahl innerhalb von Komponenten 1 bis 6 die jeweils engste Auswahl der dort als bevorzugtesten beschriebenen Substanzen getroffen wurde.

In einer bevorzugten Ausführungsform 1 enthalten die erfindungsgemäßen Emulgatormischungen

- als Fettkomponente ungehärtetes Kokosfett, bevorzugt ungehärtetes raffiniertes Kokosfett;
- LACTEM, das heißt einen Milchsäureester aus einer Mischung von Mono- und Diglyzeriden (bekannt als "E472b"), besonders bevorzugt aus überwiegend Monoglyzeriden und insbesondere bevorzugt nahezu ausschliesslich aus Monoglyzeriden; Bevorzugt ist die Fettsäurekomponente ebenfalls ohne die Verwendung von Palmöl-Erzeugnissen hergestellt. Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- ein nichtionisches Monoglyzerid mit einer ungesättigten C16-C20-Fettsäure, ganz besonders bevorzugt mit im Wesentlichen Ölsäure wie insbesondere ein Monoglyzerid mit nahezu ausschliesslich Ölsäure wie etwa Ölsäure in kommerziell erhältlich üblicher hoher Reinheit; bevorzugt ist die Fettsäurekomponente ebenfalls ohne die Verwendung von Palmöl-Erzeugnissen, d.h. insbesondere ohne Fettsäuren aus Palm-Erzeugnissen, hergestellt; Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- Zucker als einzelne Zucker und/oder als Mischungen von zwei oder mehreren Zuckern, wobei Zucker als Lösung oder angedickter Sirup, bevorzugt als Sirup eingesetzt wird, wobei die Emulgatormischung bevorzugt anschließend an die Herstellung getrocknet wird mit dem Fachmann bekannten Trocknungsmethoden, bevorzugt Walzentrocknung, Sprühtrocknung oder Schaufeltrocknung, besonders bevorzugt Sprühtrocknung. Bevorzugt eingesetzt wird Zucker als Zuckersirup; Bevorzugt eingesetzt als Zucker wird Glucose. Besonders bevorzugt eingesetzt wird daher ein Glucosesirup, besonders bevorzugt ein Glucosesirup mit einem DE-Wert von 24 bis 36, bevorzugt 28 bis 32, besonders bevorzugt 30; Bevorzugt enthält ein solcher Glucosesirup jeweils etwa 70 Prozent höhere Saccharide;
- einen Proteinbestandteil, bevorzugt Casein oder Casein-Derivat, besonders bevorzugt ein Caseinat, insbesondere Natriumcaseinat; und
- ein oder mehrere optionale sonstige Bestandteile, die für eine solche Formulierung üblicherweise vom Fachmann eingesetzt werden können, und die die Eigenschaften der Emulgatormischungen nicht wesentlich oder bevorzugt nicht negativ beeinflussen, beispielsweise Farbstoffe, Geschmacksstoffe, Antioxidantien, Konservierungsmittel, weitere geeignete Emulgatoren, Zuckeralkohole und/oder Zuckerersatzstoffe wie Stevia; bevorzugt eingesetzt werden als optionale Bestandteile Phosphate als Stabilisatoren, wie Natrium- und/oder Kaliumphosphate, bevorzugt Kaliumphosphate, besonders bevorzugt Mono-Kalium- und/oder Dikaliumphosphat und/oder Tetrakaliumphosphat, und insbesondere Tetrakaliumphosphat, ganz insbesondere Tetrakaliumpyrophosphat; Insbesondere werden als optionale sonstige Bestandteile nur Phosphate eingesetzt, wie Natrium- und/oder Kaliumphosphate, bevorzugt Kaliumphosphate, besonders bevorzugt Mono-Kalium- und/oder Dikaliumphosphat und/oder Tetrakaliumphosphat, und insbesondere Tetrakaliumphosphat und ganz insbesondere Tetrakaliumpyrophosphat. Insbesondere bevorzugt eingesetzt werden für alle Bestandteile der Emulgatormischung nur Substanzen, die nicht aus Palmöl stammen.

In einer besonders bevorzugten Ausführungsform 2 enthalten die erfindungsgemäßen Emulgatormischungen

- als Fettkomponente ungehärtetes Kokosfett, bevorzugt ungehärtetes Kokosfett ist und insbesondere bevorzugt ungehärtetes raffiniertes Kokosfett ist;
- LACTEM, das heißt einen Milchsäureester aus einer Mischung von Mono- und Diglyzeriden (bekannt als "E472b"), wobei der Lactem aus überwiegend Monoglyzeriden und bevorzugt nahezu ausschliesslich aus Monoglyzeriden besteht; Bevorzugt ist die Fettsäurekomponente ebenfalls ohne die Verwendung von Palmöl-Erzeugnissen hergestellt. Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- ein nichtionisches Monoglyzerid mit einer ungesättigten C14 bis C22-Fettsäure, bevorzugt mit im Wesentlichen Ölsäure, besonders bevorzugt nur Ölsäure als Säurekomponente des Esters; bevorzugt ist die Fettsäurekomponente ebenfalls ohne die Verwendung von Palmöl-Erzeugnisse hergestellt; Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- Zucker in Form einer Lösung oder eines angedickten Sirups, bevorzugt Sirups, wobei der Zucker im Wesentlichen Glucose ist und als Glucosesirup mit einem DE-Wert von 28 bis 32, bevorzugt 30, bevorzugt enthält ein solcher Glucosesirup jeweils etwa 70 Prozent höhere Saccharide, eingesetzt wird, wobei die Emulgatormischung bevorzugt anschließend an die Herstellung getrocknet wird mit dem Fachmann bekannten Trocknungsmethoden, bevorzugt Walzentrocknung, Sprühtrocknung oder Schaufeltrocknung, besonders bevorzugt Sprühtrocknung;

- Casein und/oder Natriumcaseinat, bevorzugt Natriumcaseinat, als Proteinbestandteil; und
- ein oder mehrere optionale sonstige Bestandteile, die für eine solche Formulierung üblicherweise vom Fachmann eingesetzt werden können, und die die Eigenschaften der Emulgatormischungen nicht wesentlich oder bevorzugt nicht negativ beeinflussen, beispielsweise Farbstoffe, Geschmackststoffe, Antioxidantien, Konservierungsmittel, weitere geeignete Emulgatoren, Zuckeralkohole und/oder Zuckerersatzstoffe wie Stevia; bevorzugt eingesetzt werden als optionale Bestandteile Phosphate als Stabilisatoren, wie Natrium- und/oder Kaliumphosphate, bevorzugt Kaliumphosphate, besonders bevorzugt Mono-Kalium- und/oder Dikaliumphosphat und/oder Tetrakaliumphosphat, und insbesondere Tetrakaliumphosphat; Insbesondere werden als optionale sonstige Bestandteile nur Phosphate eingesetzt, wie Natrium- und/oder Kaliumphosphate u, bevorzugt Kaliumphosphate, besonders bevorzugt Mono-Kalium- und/oder Dikaliumphosphat und/oder Tetrakaliumphosphat, und insbesondere Tetrakaliumphosphat und ganz insbesondere Tetrakaliumpyrophosphat. Insbesondere bevorzugt eingesetzt werden für alle Bestandteile der Emulgatormischung nur Substanzen, die nicht aus Palmöl stammen.

In einer ganz besonders bevorzugten Ausführungsform 3 enthalten die erfindungsgemäßen Emulgatormischungen

- als Fettkomponente ungehärtetes raffiniertes Kokosfett;
- LACTEM E472b, wobei der Lactem nahezu ausschliesslich aus Monoglyzeriden besteht; bevorzugt ist die Fettsäurekomponente des Lactem ebenfalls ohne die Verwendung von Palmöl-Erzeugnisse hergestellt worden; Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- ein nichtionisches Monoglyzerid mit einer ungesättigten C14 bis C22-Fettsäure, bevorzugt mit im Wesentlichen Ölsäure, besonders bevorzugt nur Ölsäure als Säurekomponente des Esters; bevorzugt ist die Fettsäurekomponente ebenfalls ohne die Verwendung von Palmöl-Erzeugnissen hergestellt; Insbesondere bevorzugt eingesetzt werden für alle Bestandteile der Emulgatormischung nur Substanzen, die nicht aus Palmöl stammen; d.h. auch das Glyzerin im Monoglyzerid stammt nicht aus Palmöl.
- Zucker in Form eines Glucosesirup mit einem DE-Wert von 28 bis 32, bevorzugt 30, eingesetzt wird, wobei die Emulgatormischung anschließend an die Herstellung getrocknet wird mit dem Fachmann bekannten Trocknungsmethoden, bevorzugt Walzentrocknung, Sprühtrocknung oder Schaufeltrocknung, besonders bevorzugt Sprühtrocknung;
- Natriumcaseinat als Proteinbestandteil; und
- ein oder mehrere optionale sonstige Bestandteile, die für eine solche Formulierung üblicherweise vom Fachmann eingesetzt werden können, und die die Eigenschaften der Emulgatormischungen nicht wesentlich oder bevorzugt nicht negativ beeinflussen, beispielsweise Farbstoffe, Geschmackststoffe, Antioxidantien, Konservierungsmittel, weitere geeignete Emulgatoren, Zuckeralkohole und/oder Zuckerersatzstoffe wie Stevia; bevorzugt eingesetzt werden als optionale Bestandteile Phosphate als Stabilisatoren, wie Natrium- und/oder Kaliumphosphate, bevorzugt Kaliumphosphate, besonders bevorzugt Mono-Kalium- und/oder Dikaliumphosphat und/oder Tetrakaliumphosphat, und insbesondere Tetrakaliumphosphat, und ganz insbesondere Tetrakaliumpyrophosphat; insbesondere werden als optionale sonstige Bestandteile nur Phosphate eingesetzt, wie Natrium- und/oder Kaliumphosphate u, bevorzugt Kaliumphosphate, besonders bevorzugt Mono-Kalium- und/oder Dikaliumphosphat und/oder Tetrakaliumphosphat, und insbesondere Tetrakaliumphosphat, ganz insbesondere Tetrakaliumpyrophosphat. Insbesondere bevorzugt eingesetzt werden für alle Bestandteile der Emulgatormischung nur Substanzen, die nicht aus Palmöl stammen.

In einer insbesondere bevorzugten Ausführungsform 3a enthalten die erfindungsgemäßen Emulgatormischungen daher zusätzlich zu den Beschränkungen dort als optionale sonstige Bestandteile nur Kaliumphosphate und insbesondere Tetrakaliumphosphat, ganz insbesondere Tetrakaliumpyrophosphat.

Die erfindungsgemäßen Emulgatormischungen wie zuvor bezeichnet, und damit auch der Ausführungsformen 1 bis 3a, enthalten die genannten Komponenten 1 bis 6 in den folgenden Gewichtsprozenten, wobei die Gewichtprozente auf eine kommerziell getrocknete Mischung bezogen sind, die Restfeuchtigkeiten von 5 Gewichtsprozent und weniger bezogen auf die Gesamtmasse, bevorzugt 4 Gewichtsprozent und weniger, besonders bevorzugt 3 Gewichtsprozent und weniger betragen, wie beispielsweise 5, 4,5, 4, 3,5, 3, 2,5, 2, 1,5, 1, 0,5 und alle Werte dazwischen, wobei die Auswahl jeweils so erfolgt, dass sich die Gesamtsumme der Gewichtsanteile der Komponenten 1 bis 6 sich jeweils zu 100 Gewichtsprozent ergänzt:

Komponente 1 ("Fettkomponente"):
20 bis 60, bevorzugt 25 bis 55, besonders bevorzugt 30 bis 50, ganz besonders bevorzugt 35 bis 45, wie insbesondere 38 bis 42, sowie alle Zahlenwerte und Zahlenbereiche zwischen 20 und 60, wie 35,5, 36, 36,5, 37, 37,5, 38, 38,5, 39, 39,5, 40, 40,5, 41, 41,5, 42, 42,5, 43, 43,5, 44, 44,5, 45, 45,5, 46, 46,5, usw.

Komponente 2 ("verestertes Monoglyzerid als Emulgator")
8 bis 30, bevorzugt 10 bis 27, besonders bevorzugt 13 bis 25, ganz besonders bevorzugt 15 bis 22, wie insbesondere 16 bis 20, sowie alle Zahlenwerte und Zahlenbereiche zwischen 8 und 30, wie beispielsweise 10, 10,5, 11, 11,5, 12, 12,5, 13, 13,5, 14, 14, 5, 15, 15, 15,5, 16, 16,5, 17, 17,5, 18, 18, 5, 19, 19, 19,5, 20,5, 21, 21,5, 22, 22,5, 23, 23,5, 24, 24,5, usw. und 10 bis 25, 15 bis 23,5 usw.

Komponente 3 ("nichtionisches Monoglyzerid als Emulgator")
0,5 bis 5, bevorzugt 1 bis 4, besonders bevorzugt 1,2 bis 3,5, ganz besonders bevorzugt 1,5 bis 3 und insbesondere 2 bis 3, sowie alle Zahlenwerte und Zahlenbereiche zwischen 0,5 und 5, wie beispielsweise 1,1, 1,3, 1,4, 1,5, 1,75, 2,1, 2,2, 2,25, 2,3, 2,4, 2,45, 2,55, 2,6, 2,65, 2,7, 2,75, 3,25, 3,75, 4,25, 4,5, 4,75 usw. und damit beispielsweise 1 bis 3,5, 1,5 bis 3,5 usw.

Komponente 4 ("Zucker")
15 bis 65, bevorzugt 20 bis 60, besonders bevorzugt 22 bis 52, ganz besonders bevorzugt 25 bis 45, insbesondere bevorzugt 27 bis 35 wie beispielsweise 28 bis 34 und 29 bis 33, sowie alle Zahlenwerte und Zahlenbereiche dazwischen, wie beispielsweise 21, 22, 23, 24, 25, 26, 27, 28, 29, 30, 31, 32, 33, 34, 36, 37, 38, 39, 40, 41, 42, 43, 44, 45, 46, 47, 48, 50, 51, 52, 53, 54, 56, 57, 58, 59 usw. sowie 25 bis 38, 19 bis 32 usw.

Komponente 5 ("Protein")
2 bis 14, bevorzugt 3 bis 12, besonders bevorzugt 4 bis 11, ganz besonders bevorzugt 5 bis 10 und insbesondere 6 bis 8 wie 7, sowie alle Zahlenwerte und Zahlenbereiche zwischen 2 und 14, wie beispielsweise 1,5, 1,75, 2,25, 2,75, 3,25, 3,5, 3,75, 4,25, 4,5, 4,75, 5, 5,25, 5,5, 5,75, 6, 6,25, 6,5, 6,75, 7, 7,25, 7,5, 7,75, 8,25, 8,5, 8,75, 9, 9,25, 9,5, 9,75, 10,25, 10,5, 10,75, 11, 11,25, 11,5, 11,75, 12,5, 13, 13,5, usw. und damit beispielsweise 3 bis 10,5, 5,75 bis 10,25, 6,25 bis 8,25 usw.

Komponente 6 ("sonstige Bestandteile")
0,1 bis 5, bevorzugt 0,2 bis 3, besonders bevorzugt 0,25 bis 2,5, ganz besonders bevorzugt 0,5 bis 1,5 und insbesondere 0,6 bis 1,2 wie 0,7 bis 1,1 sowie alle Zahlenwerte und Zahlenbereiche zwischen 0,1 und 5, wie beispielsweise 0,15, 0,2, 0,25, 0,3, 0,45, 0,5, 0,65, 0,7, 0,75, 0,8, 0,9, 0,95, 1, 1,05, 1,1, 1,15, 1,2, 1,25, 1,3, 1, 35, 1,4, 1,45, 1,5, 1,75, 2,25, 2,75, 3,25, 3,5, 3,75, 4,25, 4,5, 4,75 usw. und damit beispielsweise 0,5 bis 3,5, 0,25 bis 5 usw.

Selbstverständlich ist es auch möglich, dass das Monoglyzerid der Komponente 3 bereits beim Herstellprozess des LACTEM "eingearbeitet" wird, d.h. dass die Herstellung des LACTEM so erfolgt, dass eine Menge an Monoglyzerid nach Komponente 3 bereits im LACTEM nach Komponente 2 enthalten ist. Folglich kann demnach nicht nur die separate Komponente 2 (LACTEM) und die separate Komponente 3 (Monoglyzerid) eingesetzt werden, sondern auch eine Mischung aus Komponente(n) 2 und Komponente(n) 3. Bevorzugt wird eine solche Mischung aus Komponente 2 (LACTEM) und Komponente 3 (Monoglyzerid)eingesetzt, dass keine weitere Zugabe von separater Komponente 2 und/oder separater Komponente 3, besonders bevorzugt keine weitere Zugabe von separater Komponente 2 und separater Komponente 3 nötig wird, um zu den erfindungsgemäßen Mengenanteilen in den erfindungsgemäßen Emulgatormischungen zu gelangen.

Besonders bevorzugte Ausführungsformen sind daher die zuvor offenbarten Ausführungsformen wie die Ausführungsformen 1 bis 3a, wobei eine Mischung aus Komponente(n) 2 und Komponente(n) 3 eingesetzt wird und optional weitere Komponente 2 und/oder Komponente 3 eingesetzt werden. Ganz besonders bevorzugte Ausführungsformen sind die zuvor offenbarten Ausführungsformen wie die Ausführungsformen 1 bis 3a, wobei nur eine Mischung aus Komponente(n) 2 und Komponente(n) 3 eingesetzt wird und keine weitere Komponente 2 eingesetzt werden. Ganz insbesondere bevorzugte Ausführungsformen sind die zuvor offenbarten Ausführungsformen wie die Ausführungsformen 1 bis 3a, wobei nur eine Mischung aus Komponente(n) 2 und Komponente(n) 3 eingesetzt wird und keine weitere Komponente 2 und keine weitere Komponente 3 eingesetzt werden.
Eine solche Herstellung einer solchen LACTEM-/Monoglyzerid-Mischung kann der Fachmann ohne weiteres durchführen anhand der Vorgaben zu den Mengenverhältnissen der Komponenten in den erfindungsgemäßen Emulgatormischungen wie im Rahmen dieser Erfindung offenbart.

Die erfindungsgemäßen Emulgatormischungen finden Verwendung als Emulgatoren für Lebensmittel und Getränke, bevorzugt zur Verwendung bei der Herstellung von festen und halbfesten Lebensmittel wie insbesondere Schäume aller Art. Typische Schäume sind Mousses und ähnliche aufgeschlagene Desserts, Eis, Cremes wie Kuchenfüllcremes, Schlagschäume, Puddings, Gebäckfüllcremes sowie andere Kaltcremes und Milchshakes.
Bevorzugt finden die erfindungsgemäßen Emulgatormischungen Verwendung als Aufschlagemulgator, insbesondere für feste und halbfeste Schäume in typischen Desserts und cremeartigen Füllungen wie in Mousses und Eiscreme.

Die erfindungsgemäßen Emulgatormischungen zeigen in Formulierungen gute Schaumvolumina, Schaumfestigkeit, Konsistenz, Stabilität des Schaums sowie einen guten, d.h. angenehmen, weitgehend neutralen oder neutralen Geschmack.

Die Verwendung von ungehärtetem Kokosfett/-öl als Fettkomponente in einer Emulgatormischung und insbesondere in einem Aufschlagemulgator war bisher nicht erfolgreich, da dieses Fett bereits bei Raumtemperatur einen sehr hohen Anteil an flüssigen Fetten besitzt und der Schmelzpunkt bereits zwischen 23 - 26 °C erreicht wird. Dies führte bisher stets zu einer stark verminderten Aufschlagsfähigkeit bei Flüssigkeitstemperaturen über 10 °C und zusätzlich zu verminderten Schaumfestigkeiten, Stabilität und Konsistenz. Leistungsfähige Schäume mit Aufschlagsemulgatoren, die auf ungehärtetem Kokosfett/-öl basierten, waren bisher nicht herstellbar.

Die erfindungsgemäßen Emulgatormischungen und insbesondere die bevorzugten und besonders bevorzugten Ausführungsformen zeigen trotz ihrer Zusammensetzung aus ungehärtetem Kokosöl und Emulgatoren, die ohne Verwendung von Palmöl-basierten Erzeugnissen hergestellt wurden, ein ähnliches Aufschlagsverhalten wie beispielsweise das BASF-Produkt Lamequick CE 7203, das auf Palmrohstoffen basiert und ungehärtetes Palmkernfett/-öl verwendet.

Mit der besonderen Zusammensetzung der erfindungsgemäßen Emulgatormischungen und insbesondere deren bevorzugten Ausführungsformen konnte daher diese Problematik behoben werden und eine Leistungsfähigkeit ähnlich des palmbasierten Aufschlagsemulgators Lamequick CE 7203 erreicht werden.

Beispiele

Herstellung einer erfindungsgemäßen Emulgatormischung

0,7 kg Casein wurde in Wasser bei Raumtemperatur dispergiert. Die Dispersion wurde mit 20 %iger Natronlauge versetzt (ca. 10 % bezogen auf Casein), auf etwa 80° C erhitzt und bis zum Erhalt einer homogenen Lösung gerührt. Der pH-Wert wurde auf etwa 7 bis 7,5 eingestellt mit Natronlauge. Der Festgehalt betrug 50 Prozent. (= Lösung 1).

3,96 kg Glucosesirup (80%iger Sirup, DE 28 bis 32) wurde unter Rühren in Wasser gelöst bei erhöhten Temperaturen von nicht mehr als 65°C. Der Festgehalt betrug 50 Prozent (= Lösung 2).

Lösung 1 und Lösung 2 wurden homogen vermischt bei erhöhten Temperaturen von nicht mehr als 75° C. (= Lösung 3) (Die Temperatur beim Mischen muss oberhalb des Schmelzpunktes des verwendeten Emulgators liegen).

1,8 kg E205 palmfrei (LACTEM) und 0,25 kg Monomuls 90-O-18 OA wurden gemeinsam aufgeschmolzen bei Temperaturen von etwa 65 bis 75 Grad Celsius.

4 kg ungehärtetes, raffiniertes Kokosfett wurde bei einer Temperatur von etwa 50 - 65° C mit den geschmolzenem Emulgatoren versetzt und bei etwa 65 - 75° C gemischt bis zur optisch kontrollierten Homogenität

Die erhaltene Emulsion wurde mit Lösung 3 vermischt in einem geeigneten Rührwerk bei 65 - 75° C. Kaliumphosphat in Form von 25 g Natrium- und 75 g Dikaliumphosphat wurden eingerührt und der pH-Wert kontrolliert und mit 20%iger Natronlauge auf einen Wert zwischen 7 und 8,5 eingestellt (bevorzugt ist bei Verwendung von Tetrakaliumpyrophosphat ein Bereich von 7,5 bis 8,5; bei Verwendung von Mono und Dikaliumphosphat bleibt der pH Wert niedriger, d.h. wird bevorzugt auf Werte von 7 bis 7,5 eingestellt.). Die zweistufige Homogenisierung wurde 15 Minuten weitergeführt.

Die Emulsion wurde mit einem handelsüblichen Sprühtrockner getrocknet auf eine Restfeuchte von etwa 3 bis 2,5 Gewichtsprozent bezogen auf die Gesamtmasse

Das sprühgetrocknete Produkt wurde auf Raumtemperatur abgekühlt. Die Abkühlung erfolgte kontrolliert, d.h. nicht schlagartig sondern schrittweise bzw. kontinuierlich über einen nicht zu kurzen Zeitraum, je nach Ansatzgröße; im vorliegenden Beispiel über einen Zeitraum von 15 Minuten.

Erhalten wurde ein creme-farben-weissliches, freifließendes Pulver.

Eine alternative Herstellung nach obigem Beispiel erfolgte mit Tetrakaliumpyrophosphat dergestalt, dass das Endprodukt 0,8 Gewichtsprozent Tetrakaliumpyrophosphat enthielt (bezogen auf die Trockenmasse der Emulgatormischung). Dabei wurde das Tetrakaliumpyrophosphat eingerührt und der pH-Wert kontrolliert (Richtwert: 7,5-8,5). Wenn der pH-Wert unter 7,1 fallen sollte, so ist mit Natronlauge auf den Richtwert zu korrigieren. Dies war bei der Durchführung des Versuches jedoch nicht nötig.

Weitere Beispiele analog der obigen Herstellvorschrift enthalten:
(Zahlenangaben in Gewichtsprozent bezogen auf das feste Endprodukt)

Nutrisoft 55: Produkt der BASF SE

Zusammensetzung laut technischem Datenblatt: Mono- und Diglyzeride von Fettsäuren (E471), Lecithine (E322), alpha-Tocopherol (E307), Ascorbly Palmitat (E304), Zironensäure (E330); Hauptinhaltsstoff sind Monoglyzeride von Palmitinsäure.

E205 palmölfrei (= LACTEM): Grindsted LACTEM R 22, Firma Danisco

PGMS = E477

Beispiel 2 (WT8097)

7 Gewichtsprozent Natriumcaseinat, 30,2 Gewichtsprozent Glucosesirup 30 DE, 40 Gewichtsprozent ungehärtetes, raffiniertes Kokosfett, 18 Gewichtsprozent E205 palmölfrei, 3 Gewichtsprozent Monomuls 90-O 18OA, 1 Gewichtsprozent Nutrisoft 55, 0,8 Gewichtsprozent Tetrakaliumphosphat

Beispiel 3 (WT8104)

18 Gewichtsprozent Magermilchpulver, 22,6 Gewichtsprozent Glucosesirup 30 DE, 37 Gewichtsprozent ungehärtetes, raffiniertes Kokosfett, 18 Gewichtsprozent Acetem E 472 a mit einem Monoacetylmonoglyceridgehalt zwischen 48-50% palmölfrei, 2 Gewichtsprozent Monomuls 90-O 18 OA, 1 Gewichtsprozent Nutrisoft 55, 1,4 Gewichtsprozent Tetranatriumpyrophosphat

Beispiel 4 (WT8111)

25 Gewichtsprozent Magermilchpulver, 13,6 Gewichtsprozent Glucosesirup 30 DE, 37 Gewichtsprozent ungehärtetes, raffiniertes Kokosfett, 20 Gewichtsprozent PGMS, 1 Gewichtsprozent Monomuls 90-O 18 OA, 1 Gewichtsprozent Nutrisoft 55, 1,4 Gewichtsprozent Tetranatriumpyrophosphat

Beispiel 5 (WT8128, Vergleichsbeispiel)

3,5 Gewichtsprozent Natriumcaseinat, 51,2 Gewichtsprozent Glucosesirup 30 DE, 30 Gewichtsprozent ungehärtetes, raffiniertes Kokosfett, 14 Gewichtsprozent E205 palmölfrei, 0,25 Gewichtsprozent Monokaliumphosphat, 0,75 Dikaliumphosphat.

Beispiel 6 (WT8129)

3,5 Gewichtsprozent Natriumcaseinat, 49 Gewichtsprozent Glucosesirup 30 DE, 30 Gewichtsprozent ungehärtetes, raffiniertes Kokosfett, 14 Gewichtsprozent E205 palmölfrei, 2,5 Gewichtsprozent Monomuls 90-O 18 OA, 0,25 Gewichtsprozent Monokaliumphosphat, 0,75 Dikaliumphosphat.

Anwendungsbeispiele:

Bestimmung des relativen Volumens

Die Glasschale wird sowohl leer als auch nach Befüllen gewogen. Die Gewichtsdifferenz entspricht dem Gewicht der aufgeschlagenen Creme mit bekanntem Volumen und dient der Berechnung des relativen Volumens.
Das relative Volumen kann ausgedrückt werden als Milliliter (ml) pro 100 g:

$$\frac{\text{Volumen der Glasschale (ml)} \times 100}{\text{Nettogewicht der aufgeschlagenen Creme (g)}} = \text{ml pro 100 g}$$

Penetrometer Messung - Festigkeit von Lamequick Schäumen
Die Schaumfestigkeit wird mit einem sogenannten Penetrometer bestimmt und in "Penetrometer Einheiten" ausgedrückt:

- Das aufgeschlagene Produkt wird luftblasenfrei in eine Glasschale gefüllt, die Oberfläche glattgestrichen.
- Eine Siebscheibe mit dem Gewicht von 88 g wird ohne zu Berühren direkt auf die Schaumoberfläche gesetzt.
- Die Scheibe dringt dann genau 10 Sekunden lang in den Schaum ein
- Die Eindringtiefe wird in Penetrometer-Einheiten (PE-Einheiten) ausgedrückt:

| Penetration in Millimetern x 10 | ergibt | PE-Einheiten |
|---|---|---|
| d.H., 10 mm | = | 100 PE-Einheiten |
| und 50 mm | = | 500 PE-Einheiten |

Vergleich der Muster mit verschiedenen Emulgatoren in einer Standardrezeptur:

29- 14 g Aufschlagsemulgator
10 g Zucker (haushaltsübliche Saccharose)
125 ml Milch (1,5 % Fett)

Aufschlag für 3 Minuten mit dem Hobart N 50 und Messung des Volumens und der Festigkeit nach obiger Beschreibung.

Als Vergleich wurde Lamequick CE 7203 herangezogen (als "CE 7203" bezeichnet): Lamequick CE 7203 = Aufschlagsemulgator, basierend auf ungehärtetem Palmkernöl; (Hersteller: BASF).

Aufschlagfähigkeit als Volumen (Volumen in Millilitern pro 100g)

| Dosierung in g | 14 | 17 | 20 | 23 | 26 |
|---|---|---|---|---|---|
| Beispiel 1 | 496 | 520 | 484 | 437 | 437 |
| Beispiel 1 (zweiter Batch) | 520 | 496 | 462 | 504 | 455 |
| CE 7203 (Vergleich) | 525 | 534 | 516 | 508 | 496 |

Beispiel 1 und Beispiel 1 zweiter Batch zeigen beide ein analoges Aufschlagsvolumen im Vergleich zu CE 7203, das eine leicht konstantere Aufschlagsfähigkeit besitzt.

Schaumfestigkeit als Penetration (PE 88 g)

| Dosierung in g | 14 | 17 | 20 | 23 | 26 |
|---|---|---|---|---|---|
| Beispiel 1 | 105 | 10 | 20 | 10 | 10 |
| Beispiel 1 (zweiter Batch) | 85 | 10 | 5 | 10 | 15 |
| CE 7203 (Vergleich) | 240 | 130 | 85 | 50 | 25 |

Beispiel 1 und Beispiel 1 zweiter Batch zeigen bereits ab einer Dosierung von 17 g auf 125 ml Milch eine konstant hohe Schaumfestigkeit (niedriger Penetrationswert). CE 7203 zeigt durchgehend abfallende Penetrationswerte, im Gesamten ist die Schaumfestigkeit aber etwas geringer als bei Beispiel 1 und Beispiel 1 zweiter Batch.

Aufschlagfähigkeit als Volumen (Volumen in Millilitern pro 100g)

| Dosierung in g | 17 | 20 | 23 | 26 | 29 |
|---|---|---|---|---|---|
| WT 8097 | 525 | 499 | 469 | 462 | 449 |
| WT 8104 | 455 | 449 | 455 | 455 | 455 |
| WT 8111 | 484 | 449 | 436 | 382 | 373 |
| CE 7203 (Vergleich) | 534 | 516 | 508 | 469 | Nicht getestet |

WT 8097 zeigt im Volumen die ähnlichsten Werte zu CE 7203. WT 8104 hat ein gleichbleibend geringeres Volumen als WT 8097 und CE 7203. WT 8111 zeigt bei höheren Dosierungen ein geringeres Volumen, dieses steigt aber mit fallender Dosierung weiter an.

Schaumfestigkeit als Penetration (PE 88 g)

| Dosierung in g | 17 | 20 | 23 | 26 | 29 |
|---|---|---|---|---|---|
| WT 8097 | 100 | 60 | 70 | 35 | 45 |
| WT 8104 | 460 | 370 | 125 | 35 | 15 |
| WT 8111 | 245 | 170 | 130 | 90 | 80 |
| CE 7203 (Vergleich) | 130 | 85 | 50 | 25 | Nicht getestet |

WT 8097 zeigt konstant niedrige Penetationswerte, mit abfallender Tendenz bei höheren Dosierungen, ähnlich zu CE 7203, das im Gesamten etwas höhere Werte erreicht. WT 8104 zeigt niedrige Werte in den höheren Dosierungen von 29 g und 26 g, bei niedrigeren Dosierungen steigt der Penetrationswert aber stark an. WT 8111 zeigt mittlere Penetrationswerte mit ansteigender Tendenz bei niedrigeren Dosierungen.

Nachsteifverhalten bei Lagerung 30 Minuten im Kühlschrank (ca 5 Grad Celsius):

| Dosierung in g | 17 | 20 | 23 | 26 | 29 |
|---|---|---|---|---|---|
| WT 8097 | 60 | 10 | 5 | 20 | 0 |
| WT 8104 | 125 | 70 | 30 | 0 | 0 |
| WT 8111 | 390 | 170 | 100 | 40 | 30 |

Vergleich des Zusatzes von Komponente 2 ("mit Mono", d.h. mit Komponente 2, zu "ohne "Mono", d.h. ohne Komponente 2 = Vergleichsbeispiel):

Aufschlagfähigkeit als Volumen (Volumen in Millilitern pro 100g)

| Dosierung in g | 25 | 27 | 30 | 35 |
|---|---|---|---|---|
| WT 8129/ Mit Mono | 524 | 532 | 516 | 508 |
| WT 8128/ Ohne Mono: 408, 418 ,413, 413 (4 Wiederholungsmessungen)<br>WT 8129 Mit Mono zeigt durchgehend höhere Schaumvolumina als WT 8128. | | | | |

Schaumfestigkeit als Penetration (PE 88 g)

| Dosierung in g | 25 | 27 | 30 | 35 |
|---|---|---|---|---|
| WT 8129/ Mit Mono | 430 | 220 | 140 | 45 |
| WT 8128/ Ohne Mono | 500 | 500 | 500 | 500 |

Trotz hoher Dosierungen erreicht WT 8128 Ohne Mono keine messbare Schaumfestigkeit (Penetrationswert = 500). WT 8129 hingegen zeigt bei höheren Dosierungen eine steigende Schaumfestigkeit.

Nachsteifverhalten bei Lagerung 30 Minuten im Kühlschrank (ca 5 Grad Celsius):

| | 25 | 27 | 30 | 35 |
|---|---|---|---|---|
| WT 8129/ Mit Mono | 60 | 70 | 25 | 5 |
| WT 8128/ Ohne Mono | 500 | 500 | 500 | 500 |

Selbst nach einer Kühlung von 30 Minuten im Kühlschrank kann bei WT 8128 Ohne Mono keine Verbesserung der Schaumfestigkeit mehr erreicht werden, die Penetrationsmessungen bleiben bei PE 88 = 500. Wiederholungsmessungen zeigen dasselbe Ergebnis.

Es zeigt sich dass die Kombination aus ungesättigtem Monoglycerid und LACTEM sowohl für das Erreichen eines entsprechenden Volumens notwendig ist, als auch für die Erreichung einer Schaumfestigkeit (Schaumpenetrationswerte, der Wert 500 ist maximale Penetration und somit ein sehr weicher Schaum):

WT 8128: weicher, feuchter Schaum ohne Struktur, fließend;

WT 8129: zartes poriges Abstechen, Schaum wird leichter bei niedrigeren Einsatzmengen; in Summe: höheres Volumen und Festigkeit bei WT 8129 im Vergleich zu WT 8128.

Zusätzlich wurden die hergestellten Emulgatormischungen ebenfalls in einer Schokoladenmousse-Rezeptur verglichen:

Wiederum Aufschlag aller Zutaten für 3 Minuten mit dem Hobart N 50:

| Zutaten | | | | | |
|---|---|---|---|---|---|
| | | | | | Dosierung in g |
| Aufschlagsemulgator | | | | | 17,00 |
| Zucker (handelsübliche Saccharose) | | | | | 51,50 |
| Cryogel 200/3 (kaltlösliche Gelatine von Firma PB Gelatins) | | | | | 6,50 |
| Magermilchpulver sprühgetrocknet (bsp Sprüh-Magermilchpulver von Firma Almil) | | | | | 5,00 |
| Kakao (Typ Bäko, Firma Bäko) 10/12% stark entölt, alkalisiert | | | | | 20,00 |
| | | | | | |
| Milch (1,5 % Fett) in ml | | | | | 250 |
| | WT 8097 (Lactem) | WT 8104 (Acetem) | WT 8111 (PGMS) | WT 8368 = Beispiel 1 | CE 7203 |
| Vol / 100 g | 256 | 197 | 269 | 243 | 242 |
| PE 88 g | 495 | 500 | 485 | 470 | 500 |
| nach 30 min KS PE 88 g | 20 | 15 | 65 | 10 | 50 |
| PE: Penetrationstiefe KS = im Kühlschrank gelagert, dann PE bestimmt | | | | | |

Die Festigkeitsmessung nach 30 min zeigt das Nachsteifverhalten des Produktes bei Aufbewahrung im Kühlschrank.

Alle Beispiele bis auf WT 8104 zeigen vergleichbare Aufschlagsvolumina, WT 8104 liegt deutlich niedriger. Die Penetrationswerte direkt nach Aufschlag sind bei allen Mustern ähnlich, eine signifikante Schaumfestigkeit entwickelt sich erst nach Kühlung für 30 Minuten im Kühlschrank. Die Nachmessung zeigt etwas geringere Penetrationswerte für WT 8097, WT 8104 und WT 8368 (Beispiel 1).

Kuchenfüllcreme:

Rezeptur:

| | |
|---|---|
| Aufschlagsemulgator | 105 g |
| Zucker (handelsübliche Saccharose) | 56 g |
| Magermilchpulver sprühgetrocknet (analog andere Rezeptur) | 40 g |
| Wasser | 250 ml |

Aufschlag aller Zutaten für 3 Minuten im Hobart N 50.

| Aufschlagsemulgator | 8097 (Lactem) | WT 8104 (Acetem) | WT 8111 (PGMS) | WT 8368 = Beispiel 1 | CE 7203 |
|---|---|---|---|---|---|
| Vol / 100 g | 382 | 397 | 258 | 382 | 382 |

(fortgesetzt)

| Aufschlagsemulgator | 8097 (Lactem) | WT 8104 (Acetem) | WT 8111 (PGMS) | WT 8368 = Beispiel 1 | CE 7203 |
|---|---|---|---|---|---|
| PE 88 g | 115 | 50 | 145 | 0 | 50 |
| nach 30 min KS PE 88 g | 5 | 0 | 120 | 0 | 0 |

Alle Beispiele zeigen ein ähnliches Volumen, ausgenommen WT 8111, das ein deutlich niedrigeres Schaumvolumen erreicht. Gleichzeitig hat WT 8111 auch die geringste Schaumfestigkeit, selbst nach einer Kühlung von 30 Minuten im Kühlschrank verbessert sich der Penetrationswert nicht merklich.

WT 8097 und WT 8368 (Beispiel 1) zeigen somit in den Anwendungen durchgehend die konstantesten Eigenschaften und sind somit am ähnlichsten im Vergleich zu CE 7203.

Für die Herstellung der Schäume der Standardrezeptur werden zuerst die trocknen Zutaten wie genannt eingewogen und vermischt. Anschließend wird die entsprechende Milchmenge in einem Messzylinder abgemessen. Die verwendete Milch besitzt dabei immer die gleiche Temperatur (10+-1 °C) um Temperatureinflüsse auszuschließen. Im Folgenden wird die abgemessene Milchmenge in die Rührschüssel des Aufschlagsgeräts Hobart N 50 gegeben, die trockenen Rohstoffe hinzugegeben und alles kurz mit dem Rührbesen vermischt. Danach wird die Mischung auf Stufe 3 für genau drei Minuten aufgeschlagen. Anschließend wird das Rührgerät ausgeschaltet, der Schaum wird aus der Rührschüssel entnommen und für die genannten Messungen möglichst blasenfrei in eine Glasschüssel definierten Volumens gefüllt.

Für die Herstellung der Schokoladenmousse werden zuerst die trocknen Zutaten wie genannt eingewogen und vermischt. Anschließend wird die entsprechende Milchmenge in einem Messzylinder abgemessen. Die verwendete Milch besitzt dabei immer die gleiche Temperatur (10 °C +/- 1) um Temperatureinflüsse auszuschließen. Im Folgenden wird die abgemessene Milchmenge in die Rührschüssel des Aufschlagsgeräts Hobart N 50 gegeben, die trockenen Rohstoffe hinzugegeben und alles kurz mit dem Rührbesen vermischt. Danach wird die Mischung auf Stufe 3 für genau drei Minuten aufgeschlagen. Anschließend wird das Rührgerät ausgeschaltet, der Schaum wird aus der Rührschüssel entnommen und für die genannten Messungen möglichst blasenfrei in eine Glasschüssel definierten Volumens gefüllt.

Nach Durchführung der ersten Messungen wird die Oberfläche wieder glatt gestrichen (bei Bedarf Material nachgegeben) und das Muster in den Kühlschrank gestellt. Nach 30 Minuten wird erneut die Festigkeit mittels Penetrometer bestimmt, um das Nachsteifverhalten der Rezeptur zu überprüfen.

Für die Herstellung der Kuchencreme werden zuerst die trocknen Zutaten wie genannt eingewogen und vermischt. Anschließend wird die entsprechende Wassermenge in einem Messzylinder abgemessen. Das verwendete Wasser besitzt dabei immer die gleiche Temperatur (16 °C +/- 1) um Temperatureinflüsse auszuschließen. Im Folgenden wird die abgemessene Wassermenge in die Rührschüssel des Aufschlagsgeräts Hobart N 50 gegeben, die trockenen Rohstoffe hinzugegeben und alles kurz mit Hand vermischt. Danach wird die Mischung auf Stufe 3 für genau drei Minuten aufgeschlagen. Anschließend wird das Rührgerät ausgeschaltet, der Schaum wird aus der Rührschüssel entnommen und für die genannten Messungen möglichst blasenfrei in eine Glasschüssel definierten Volumens gefüllt.

Nach Durchführung der ersten Messung wird die Oberfläche wieder glatt gestrichen (bei Bedarf Material nachgegeben) und das Muster in den Kühlschrank gestellt. Nach 30 Minuten wird erneut die Festigkeit mittels Penetrometer bestimmt, um das Nachsteifverhalten der Rezeptur zu überprüfen.

**Patentansprüche**

1. Emulgatormischung enthaltend Komponenten 1 bis 6, mit

- (Komponente 1) Kokosfett, das ungehärtet ist;
- (Komponente 2) Milchsäureester aus Mono-/Diglyzeriden als Emulgator, wie LACTEM, und/oder Essigsäureester von Mono-/Diglyzeriden als Emulgator, wie ACETEM und/oder Propylenglycolester von Fettsäuren (E477);
- (Komponente 3) ein oder mehrere nichtionische Monoglyzeride mit einer ungesättigten C14 bis C22-Fettsäure;
- (Komponente 4) Zucker als einzelne Zucker und/oder als Mischungen von zwei oder mehreren Zuckern, wobei der Zucker als Feststoff, als Lösung oder angedickter Sirup eingesetzt wird,;
- (Komponente 5) Proteinbestandteile wie Milchpulver oder Casein und deren Derivate,; und
- (Komponente 6) optional sonstige Bestandteile ausgewählt aus der Gruppe bestehend aus Farbstoffe, Geschmackstoffe, Antioxidantien, Konservierungsmittel, weitere geeignete Emulgatoren, Zuckeralkohole und/oder Zuckerersatzstoffe, Phosphate als Stabilisatoren, ,

wobei die eingesetzten Mengen (in Gewichtsprozent bezogen auf die Gesamtmasse der trockenen Emulgatormischung) jeweils ausgewählt sind aus den folgenden Bereichen für (Zahlenangabe in Gewichtsprozenten bezogen auf die Gesamtmasse der trockenen Emulgatormischung)

- Komponente 1 ("Fettkomponente"):
20 bis 60,,
- Komponente 2 ("verestertes Monoglyzerid als Emulgator") 8 bis 30,,
- Komponente 3 ("nichtionisches Monoglyzerid als Emulgator")
0,5 bis 5,
- Komponente 4 ("Zucker")
15 bis 65,
- Komponente 5 ("Protein")
2 bis 14;
- Komponente 6 ("sonstige Bestandteile")

0,1 bis 5, wobei die Restfeuchtigkeiten der Emulgatormischung 5 Gewichtsprozent und weniger bezogen auf die Gesamtmasse der trockenen Emulgatormischung betragen, und wobei die Auswahl der zur Herstellung eingesetzten Anteile je Komponente 1 bis 6 jeweils so erfolgt, dass sich die Gesamtsumme der Gewichtsanteile der Komponenten 1 bis 6 zu 100 Gewichtsprozent bezogen auf die trockene Emulgatormischung ergänzt, und wobei die Emulgatormischung nach der Herstellung gegebenenfalls getrocknet wird mittels Trocknungsmethoden, so dass sich die genannten Restfeuchten ergeben.

2. Emulgatormischung nach Anspruch 1, wobei als Komponente 2 ein LACTEM ausgewählt ist.

3. Emulgatormischung nach Anspruch 1 wobei als Komponente 2 ein Propylenglycolester von Fettsäuren (E477) ausgewählt ist.

4. Emulgatormischung nach einem der Ansprüche 1 bis 3, wobei als Komponente 6 Mono- und/oder Di-Kalium-Phosphat eingesetzt wird.

5. Emulgatormischung nach einem der Ansprüche 1 bis 3, wobei als Komponente 6 Tetra-Kalium-Pyrophosphat eingesetzt wird.

6. Emulgatormischung nach einem der Ansprüche 1 bis 5, wobei die eingesetzten Mengen (in Gewichtsprozent bezogen auf die Gesamtmasse der trockenen Emulgatormischung) jeweils ausgewählt sind aus den folgenden Bereichen für (Zahlenangabe in Gewichtsprozenten bezogen auf die Gesamtmasse der trockenen Emulgatormischung)

- Komponente 1 ("Fettkomponente") 35 bis 45,
- Komponente 2 ("verestertes Monoglyzerid als Emulgator") 5 bis 22
- Komponente 3 ("nichtionisches Monoglyzerid als Emulgator") 1 bis 4,
- Komponente 4 ("Zucker") 15 bis 65, bevorzugt 20 bis 60, besonders bevorzugt 22 bis 52, ganz besonders bevorzugt 25 bis 45, insbesondere bevorzugt 27 bis 35 wie beispielsweise 28 bis 34 und 29 bis 33,
- Komponente 5 ("Protein") 4 bis 11,
- Komponente 6 ("sonstige Bestandteile") 0,25 bis 1,5.

7. Verwendung einer Emulgatormischung nach einem der Ansprüche 1 bis 6 zur Herstellung von Lebensmittelprodukten.

8. Verwendung einer Emulgatormischung nach einem der Ansprüche 1 bis 6 zur Herstellung von Schäumen.

9. Verfahren zur Herstellung einer Emulgatormischung nach einem der Ansprüche 1 bis 6, wobei Komponenten 1 bis 5 und optionale Komponente 6 einzeln oder eine oder mehrere gemeinsam, einzeln oder vorgemischt, als Feststoff, Lösung oder Sirup in ein Mischgefäß gegeben werden, gemischt werden, und anschließend optional getrocknet werden mit einer Trocknungsmethode, auf eine Restfeuchte von 5 Gewichtsprozent bezogen auf die Gesamtmasse oder weniger, wobei die Emulgatormischung als ein Feststoff erhalten wird.

**Claims**

1. An emulsifier mixture containing components 1 to 6, with

   - (Component 1) coconut fat which is unhardened;
   - (Component 2) lactic esters of mono-/diglycerides as emulsifier such as LACTEM and/or acetic esters of mono-/diglycerides as emulsifier such as ACETEM and/or propylene glycol ester of fatty acids (E477);
   - (Component 3) one or more nonionic monoglycerides with an unsaturated C14 to C22 fatty acid;
   - (Component 4) sugars as individual sugars and/or as mixtures of two or more sugars, wherein the sugar is used as solid, as solution or thickened syrup;
   - (Component 5) protein constituents such as milk powder or casein and derivatives thereof; and
   - (Component 6) optionally other constituents, selected from the group consisting of colorants, flavorings, antioxidants, preservatives, further suitable emulsifiers, sugar alcohols and/or sugar substitutes, phosphates as stabilizers,

   wherein the quantities used (in weight percent based on the total mass of the dry emulsifier mixture) are respectively selected from the following ranges (numerical values in weight percent based on the total mass of the dry emulsifier mixture) for

   - Component 1 ("fat component"):
   20 to 60,
   - Component 2 ("esterified monoglyceride as emulsifier")
   8 to 30,
   - Component 3 ("nonionic monoglyceride as emulsifier")
   0.5 to 5,
   - Component 4 ("sugar")
   15 to 65,
   - Component 5 ("protein")
   2 to 14
   - Component 6 ("other constituents")
   0.1 to 5,

   wherein the residual moisture contents of the emulsifier mixture amount to 5 weight percent and less based on the total mass of the dry emulsifier mixture,
   and wherein the selection of the contents per component 1 to 6 used for the production is in each case made such that the overall sum of the contents by weight of the components 1 to 6 comes to 100 weight percent based on the dry emulsifier mixture,
   and wherein the emulsifier mixture after production is optionally dried by means of drying methods so that said residual moisture contents are obtained.

2. The emulsifier mixture according to claim 1, wherein as component 2 a LACTEM is selected.

3. The emulsifier mixture according to claim 1 wherein as component 2 a propylene glycol ester of fatty acids (E477) is selected.

4. The emulsifier mixture according to one of claims 1 to 3, wherein as component 6 mono and/or dipotassium phosphate is used.

5. The emulsifier mixture according to one of claims 1 to 3, wherein as component 6 tetrapotassium pyrophosphate is used.

6. The emulsifier mixture according to one of claims 1 to 5, wherein the quantities used (in weight percent based on the total mass of the dry emulsifier mixture) are respectively selected from the following ranges (numerical values in weight percent based on the total mass of the dry emulsifier mixture) for

   - Component 1 ("fat component") 35 to 45,
   - Component 2 ("esterified monoglyceride as emulsifier") 5 to 22,
   - Component 3 ("nonionic monoglyceride as emulsifier") 1 to 4,

- Component 4 ("sugar") 15 to 65, preferably 20 to 60, particularly preferably 22 to 52, quite especially preferably 25 to 45, particularly preferably 27 to 35 such as for example 28 to 34 and 29 to 33,
- Component 5 ("protein") 4 to 11, and
- Component 6 ("other constituents") 0.25 to 1.5.

7.  Use of an emulsifier mixture according to one of claims 1 to 6 for the production of food products.

8.  Use of an emulsifier mixture according to one of claims 1 to 6 for the production of foams.

9.  A method for the production of an emulsifier mixture according to one of claims 1 to 6, wherein components 1 to 5 and optional component 6 are placed in a mixing vessel singly or one or more together, individually or premixed, as solid, solution or syrup, are mixed, and then are optionally dried with a drying method to a residual moisture content of 5 weight percent based on the total mass or less, wherein the emulsifier mixture is obtained as a solid.

**Revendications**

1.  Mélange d'émulsifiant contenant les composants 1 à 6, avec

    - (composant 1) de la graisse de coco, qui est non durcie ;
    - (composant 2) des esters d'acide lactique de mono-/diglycérides en tant qu'émulsifiant, tels qu'un LACTEM, et/ou des esters d'acide acétique de mono-/diglycérides en tant qu'émulsifiant, tels qu'un ACETEM, et/ou des esters de propylène glycol d'acides gras (E477) ;
    - (composant 3) un ou plusieurs monoglycérides non ioniques avec un acide gras en C14 à C22 insaturé ;
    - (composant 4) des sucres sous la forme de sucres individuels et/ou sous la forme de mélanges de deux ou davantage de sucres, le sucre étant utilisé sous la forme d'un solide, sous la forme d'une solution ou d'un sirop épaissi ;
    - (composant 5) des constituants protéiques tels que de la poudre de lait ou de la caséine et leurs dérivés ; et
    - (composant 6) éventuellement d'autres constituants choisis dans le groupe constitué par les colorants, les aromatisants, les antioxydants, les conservateurs, d'autres émulsifiants appropriés, les sucres-alcools et/ou les substituts de sucre, les phosphates en tant que stabilisateurs ;

    dans lequel les quantités utilisées (en pourcentage en poids par rapport à la masse totale du mélange d'émulsifiant sec) sont à chaque fois choisies dans les plages suivantes pour (données numériques en pourcentage en poids par rapport à la masse totale du mélange d'émulsifiant sec)

    - composant 1 (« composant gras ») :
    20 à 60,
    - composant 2 (« monoglycéride estérifié en tant qu'émulsifiant »)
    8 à 30,
    - composant 3 (« monoglycéride non ionique en tant qu'émulsifiant »)
    0,5 à 5,
    - composant 4 (« sucre »)
    15 à 65,
    - composant 5 (« protéine »)
    2 à 14,
    - composant 6 (« autres constituants »)
    0,1 à 5, dans lequel les humidités résiduelles du mélange d'émulsifiant sont de 5 pour cent en poids et moins par rapport à la masse totale du mélange d'émulsifiant sec, et dans lequel le choix des proportions utilisées pour la fabrication de chacun des composants 1 à 6 a lieu de telle sorte que la somme totale des proportions en poids des composants 1 à 6 soit de 100 pour cent en poids par rapport au mélange d'émulsifiant sec,

    et dans lequel le mélange d'émulsifiant est éventuellement séché après la fabrication au moyen de méthodes de séchage, de manière à obtenir les humidités résiduelles indiquées.

2.  Mélange d'émulsifiant selon la revendication 1, dans lequel un LACTEM est choisi en tant que composant 2.

3.  Mélange d'émulsifiant selon la revendication 1, dans lequel un ester de propylène glycol d'acides gras (E477) est choisi en tant que composant 2.

**4.** Mélange d'émulsifiant selon l'une quelconque des revendications 1 à 3, dans lequel du phosphate de mono- et/ou di-potassium est utilisé en tant que composant 6.

**5.** Mélange d'émulsifiant selon l'une quelconque des revendications 1 à 3, dans lequel du pyrophosphate de tétra-potassium est utilisé en tant que composant 6.

**6.** Mélange d'émulsifiant selon l'une quelconque des revendications 1 à 5, dans lequel les quantités utilisées (en pourcentage en poids par rapport à la masse totale du mélange d'émulsifiant sec) sont à chaque fois choisies dans les plages suivantes pour (données numériques en pourcentage en poids par rapport à la masse totale du mélange d'émulsifiant sec)

- composant 1 (« composant gras ») 35 à 45,
- composant 2 (« monoglycéride estérifié en tant qu'émulsifiant ») 5 à 22,
- composant 3 (« monoglycéride non ionique en tant qu'émulsifiant ») 1 à 4,
- composant 4 (« sucre ») 15 à 65, de préférence 20 à 60, de manière particulièrement préférée 22 à 52, de manière tout particulièrement préférée 25 à 45, de manière notamment préférée 27 à 35, tel que par exemple 28 à 34 et 29 à 33,
- composant 5 (« protéine ») 4 à 11,
- composant 6 (« autres constituants ») 0,25 à 1,5.

**7.** Utilisation d'un mélange d'émulsifiant selon l'une quelconque des revendications 1 à 6 pour la fabrication de produits alimentaires.

**8.** Utilisation d'un mélange d'émulsifiant selon l'une quelconque des revendications 1 à 6 pour la fabrication de mousses.

**9.** Procédé de fabrication d'un mélange d'émulsifiant selon l'une quelconque des revendications 1 à 6, dans lequel les composants 1 à 5 et éventuellement le composant 6 sont ajoutés individuellement ou un ou plusieurs ensemble, individuellement ou pré-mélangés, sous la forme d'un solide, d'une solution ou d'un sirop, dans un récipient de mélange, mélangés, puis éventuellement séchés avec une méthode de séchage, à une humidité résiduelle de 5 pour cent en poids par rapport à la masse totale ou moins, le mélange d'émulsifiant étant obtenu sous la forme d'un solide.

**IN DER BESCHREIBUNG AUFGEFÜHRTE DOKUMENTE**

**In der Beschreibung aufgeführte Patentdokumente**

- US 2011200732 A
- US 4325979 A

**In der Beschreibung aufgeführte Nicht-Patentliteratur**

- *CHEMICAL ABSTRACTS,* 8001-31-8